# EUROPEAN PATENT SPECIFICATION

(11) **EP 1 328 490 B1**
(45) Date of publication and mention of the grant of the patent: **24.11.2004**
(21) Application number: 01971522.6
(22) Date of filing: 12.09.2001
(51) Int. Cl.: C04B 35/14, C03B 5/43

(54) **REFRACTORY ARTICLE**
FEUERFESTER FORMKÖRPER
ARTICLE REFRACTAIRE

(30) Priority: 22.09.2000 EP 00870213
(43) Date of publication of application: 23.07.2003
(73) Proprietor: Premier Refractories (Belgium) S.A., 7330 Saint-Ghislain (BE)
(72) Inventor: DRAMAIS, Roland, B-7070 Le Roeulx (BE); BUTTOL, Xavier, F-59990 Rombies (FR); WATTIEZ, Michel, B-7600 Peruwelz (BE)
(74) Representative: Debled, Thierry
(86) International application number: PCT/BE2001/000152
(87) International publication number: WO 2002/024599

(56) References cited:
- DE-A- 3 908 124
- SHULVER I N W: "Silica refractories in the glass industry" GLASS TECHNOLOGY, vol. 29, no. 5, October 1988 (1988-10), pages 170-173, XP002160488

## Description

The present invention relates to a very high performance refractory article especially resistant to corrosion, and to a new process for the manufacture of such an article. In particular, the invention relates to an article made of crystalline silica having high density and capable of withstanding the corrosive atmosphere of a glassmaking furnace, notably an oxy-fuel fired furnace.

In the manufacture of glass, the raw materials are charged into a melting furnace and then melted by the action of heat released by the burning of a combustible material and an oxidant. The water vapour arising from the combustion reacts with the alkaline oxides present in the glass melt to form alkaline hydroxides which evaporate from the bath of molten glass. These alkaline hydroxides, such as sodium hydroxide, react with the refractory walls of the furnace and induce corrosion of the refractory materials. In recent years, with the advent of oxy-fuel furnaces, accelerated corrosion of the refractory bricks has been observed in the superstructure of glass melting furnaces that have converted to this technology. In particular, very severe losses have been reported in the silica brick crowns of certain types of glass-melting furnaces, notably in furnaces making glass for television screens. It is generally considered that the principal cause of this accelerated corrosion under oxy-combustion conditions is the higher content of alkaline hydroxides such as sodium or potassium hydroxide, water or even gaseous compounds of boron or, where applicable, lead, etc. Under oxy-combustion conditions, atmospheric nitrogen is effectively removed from the oxidant gases and the volume of combustion products is generally reduced by a factor of 3 or 4 compared with that obtaining in conventional combustion and, as a consequence, the concentrations of alkaline hydroxides and other corrosive compounds in the gaseous state are increased accordingly.

Accelerated corrosion of silica bricks in the superstructure of a glass-melting furnace reduces the service life of the furnace and/or results in costly repair operations.

Attempts have already been made to build the superstructure of a glass-melting furnace in a refractory material more resistant to corrosion than silica. For example, use has been made of alumina-zirconia-silica (AZS) bricks to construct the crown of a glass-melting furnace. However, during the operating life of such a superstructure - which may last several years - it is possible for fragments of refractory material to spall off the bricks and drop into the molten glass bath. In contrast to the situation that applies in the case of silica bricks, which have a composition very close to that of glass, the dropping of such brick fragments made of AZS into the melt unavoidably produces defects in the glass.

It would therefore be desirable to be able to use silica bricks having a very high corrosion resistance and which could thus be used, in particular, for the fabrication of the superstructures of glass-melting furnaces, such as for example the crown of an oxy-fuel furnace.

US patent 4,988,649 describes silica bricks of low porosity and exhibiting high resistance to corrosion. That document describes silica bricks with high density and high thermal conductivity intended for metallurgical applications (Cowper stove for blast furnaces) or more particularly for coke ovens. These bricks are made from quartzites (such as free quartzites or cement quartzites), pyrogenic silica and elementary silicon which, as it oxidises to form silica during firing, contributes towards increasing the density of the brick. The quartzites used according to the above patent (Merzhausen quartzite) contain various minerals such as aluminium or titanium oxides which form plastic liquid phases with the silica during firing of the brick. This high-temperature plasticity works to effectively prevent the formation of cracks which can occur during the allotropic transformation of quartz into tridymite and cristobalite which, without this plasticity, is generally accompanied by a considerable variation in volume and loss of cohesion of the crystalline matrix.

Although such bricks may be perfectly suitable for the coke-oven applications envisaged in the document, for glassmaking applications and particularly for the manufacture of bricks intended to form the superstructure of a glass-melting furnace, the bricks described in US patent 4,988,649 cannot be used owing to their unduly high content of aluminium oxide which also has the property of increasing the flux factor of the silica (defined as the sum of the percentage by weight of aluminium oxide plus twice the percentage by weight of alkaline oxides) and owing to their unduly high titanium oxide content (silica bricks intended for glassmaking applications, according to ASTM C416-70, must contain less than 0.20% by weight of titanium oxide). Thus, in glassmaking, working temperatures are generally 200 to 300°C higher than those encountered in coke production, and it is therefore necessary to minimise the presence of compounds liable to form phases that are fusible with silica or, as a general rule, to lower the refractoriness of the brick. Similarly, it has been shown that at the temperatures typically encountered in glassmaking, the presence of titanium oxide in the silica is highly detrimental to the mechanical strength of the brick.

This situation cannot be remedied simply by eliminating these non-silica based materials from the feedstock. In effect, the absence of articles forming a plastic phase with the silica during firing gives rise to extensive cracking, resulting in a brick quality scarcely compatible with glassmaking applications (high porosity, low rupture strength, etc.).

For a brick to be suitable for use in applications relating to the glassmaking industry, it is therefore necessary for it to have a limited content of aluminium and titanium oxides whilst presenting excellent physical characteristics generally attributed to the presence of these compounds.

Thus, no silica bricks are available at present that are suitable for use in glassmaking and which present sufficient corrosion-resistance to permit their use in oxy-fuel furnaces and, more particularly, for construction of the crown of such a furnace.

The present invention provides refractory articles including at least 50% by weight of crystalline silica, not more than 1% by weight of residual quartz and not more than 0.4% by weight of titanium oxide, having an apparent density greater than or equal to 1.88 and a flux factor less than or equal to 0.75.

A silica refractory article is disclosed in a paper entitled 'Silica refractory in the glass industry" by I.N.W. Shulver in Glass Technology 29, 170 (1988). Table 1 of this paper discloses a silica refractory article comprising 96.5% SiO₂, 0.1 % TiO₂, 0.3-0.4% Al₂O₃ and 0.1 % alkalis. The quartz content being 2 %.

When referring to crystalline silica in the context of the present invention, this means silica in the form of tridymite or cristobalite. It is essential to ensure that the quantity of residual quartz is minimised to avoid any volume change problems accompanying the conversion of quartz to cristobalite and tridymite during annealing or use of the refractory articles.

Preferably, the quantity of titanium oxide (TiO₂) is less than 0.2% by weight of the article so as to conform to the above mentioned standard.

Such bricks have been found to be particularly advantageous. Despite their limited content of aluminium and titanium oxides, they have a density in excess of 1.88 and a very high resistance to corrosion, as well as excellent cold crushing resistance properties and good cohesion of the ceramic matrix, so that their use for the construction of the superstructure of an oxy-fuel glass melting furnace is possible.

According to a preferred embodiment, the ratio by weight of tridymite to cristobalite is greater than or equal to 1. In this way, it is possible to effectively reduce certain problems of thermal expansion which are principally caused by the conversion of cristobalite from 200°C onwards.

This ratio can be favoured by the presence of one or more mineralising agents selected, for example, from compounds of calcium, magnesium or iron (hydroxides or carbonates of these, for example). Preferably, the refractory article includes at least 1% by weight of mineralising agent so that the tridymite/cristobalite ratio is in favour of tridymite.

According to a variant of the present invention, the refractory article may also include a certain quantity of amorphous silica. Generally, this amorphous silica will be introduced in the form of grains of fused silica, vitreous silica, colloidal silica or any other known form. According to this variant of the invention, the refractory article includes 2 to 50% by weight of amorphous silica.

Finally, according to another variant of the present invention, it is possible to considerably increase the density of the refractory article thus obtained by incorporating into its composition metallic or non-metallic species (in the form of grains or flakes) which, as they oxidise during firing, annealing and/or use of the refractory article in question, provide refractory oxides which are incorporated into the crystalline matrix, thereby contributing substantially to increased density of the article. Other properties such as crushing resistance (which is increased) and porosity (which is reduced) are also improved in this way. These species may be introduced in elemental form (silicon, aluminium, magnesium, for example), in alloy form, or as elements in the combined state (nitrate, carbonate, for example).

Such bricks can be obtained by the use of appropriate base raw materials and by using a particular firing process. Thus, according to a particular embodiment, the refractory articles according to the invention are prepared according to a process which includes a very specific firing cycle. This firing cycle involves progressively heating the constituents of the articles (for example, raising the temperature by 5 to 15°C per hour for 85 to 300 hours) to a temperature level of around 1300 to 1500°C. This level is held for a time period between 5 and 100 hours. The hold time and temperature can be adapted by the person skilled in the art in relation to the thickness of the article and the proportion of metallic and non-metallic species to be oxidised included in the composition of the article.

It is possible to terminate the firing cycle at the end of the temperature hold stage described above and then to cool the article. However, it is advantageous to continue to raise the temperature to 1500 to 1650°C so as to homogenise and stabilise the crystalline phases.

Using this new process it was possible to obtain refractory articles, in particular bricks for glass furnace superstructures, which met all of the requirements specified above.

Bricks for use in glass furnace superstructures were made according to the invention from the following constituents (% by weight) :

| | |
|---|---|
| extra-siliceous fine-grain rock (comprising 98.5% silica) | 80% |
| fine silica sand (comprising 99.5% silica) | 11% |
| hydrated lime | 4% |
| silicon | 5% |

After dry blending of the constituents, water was added at the rate of 60 1/T of constituents and a binder (lignosulfonate base) at the rate of 10 kg/T of constituents, followed by further mixing. The bricks were then formed by pressing and drying using conventional techniques known to the person skilled in the art. The bricks were then fired in a batch kiln. The following cycle was employed: raise temperature by 10°C/h for 140 hours, hold temperature at 1425°C for 75 hours, raise temperature by 15°/h for 5 hours.

Various measurements of physico-chemical parameters were then carried out on the bricks thus obtained. These values were then compared to those for a brick conventionally used in glassmaking (HEPSIL VMA brick) and well known to the person skilled in the art.

| | Example 1 | HEPSIL VMA Silica |
|---|---|---|
| Apparent density (g/cm³) | 1.90 | 1.83-1.84 |
| True density (g/cm³) | 2.315 | 2.320 |
| Cold crushing resistance (N/mm²) | 60 | 24-32 |
| Apparent porosity (%) | 17.5 | 21-24.5 |
| Permeability (nPerm) | 5 | 10 |
| Refractoriness under load (0.2 N/mm²) in °C | 1675 | 1645-1660 |
| Flux factor | 0.75 | 1.2-0.9 |
| Tridymite/cristobalite ratio | 1.5 | |

## Claims

1. Refractory article including at least 50% by weight of crystalline silica, not more than 1% by weight of residual quartz and not more than 0.4% by weight of titanium oxide, having an apparent density greater than or equal to 1.88 and a flux factor less than or equal to 0.75.

2. Refractory article according to claim 1, **characterised in that** the crystalline phase is composed essentially of tridymite and cristobalite.

3. Refractory article according to claim 2, **characterised in that** the ratio (by weight) of tridymite to cristobalite is greater than or equal to 1.

4. Refractory article according to claim 3, **characterised in that** the article includes at least 1% by weight of a mineralising agent.

5. Refractory article according to any of claims 1 to 4, **characterised in that** the article includes 2 to 50% by weight of amorphous silica.

6. Refractory article according to any of claims 1 to 4, **characterised in that** the article includes 1 to 10% by weight of a species selected from silicon, aluminium, magnesium or their derivatives.

7. Brick for glass furnace superstructure including at least 50% by weight of crystalline silica, not more than 1 % by weight of residual quartz and not more than 0.4% by weight of titanium oxide, having an apparent density greater than or equal to 1.88 and a flux factor less than or equal to 0.75.

8. Firing process for a refractory article according to claim 1 involving
a) progressive heating of the constituents to a temperature between 1300 and 1500°C ;
b) hold period of 5 to 100 hours at the temperature reached after the heating stage.

9. Process according to claim 8, **characterised in that** the temperature hold stage is followed by c) further heating to a temperature of 1500 to 1650°C.

10. Process according to claim 8, **characterised in that** the heating phase a) is performed at the rate of 5 to 15°C/hour for 85 to 300 hours.

## Patentansprüche

1. Feuerfester Gegenstand, der mindestens 50 Gewichtsprozent kristallines Siliziumdioxid, nicht mehr als 1 Gewichtsprozent an restlichem Quarz und nicht mehr als 0,4 Gewichtsprozent Titanoxid einschließt, mit einer scheinbaren Dichte größer als oder gleich 1,88, und einem Fluxfaktor von weniger als oder gleich 0,75.

2. Feuerfester Gegenstand nach Anspruch 1, **dadurch gekennzeichnet, dass** die kristalline Phase im Wesentlichen aus Tridymit und Cristobalit zusammengesetzt ist.

3. Feuerfester Gegenstand nach Anspruch 2, **dadurch gekennzeichnet dass** das Verhältnis (auf das Gewicht) von Tridymit-zu-Cristobalit größer als oder gleich 1 ist.

4. Feuerfester Gegenstand nach Anspruch 3, **dadurch gekennzeichnet, dass** der Gegenstand mindestens 1 Gewichtsprozent eines mineralisierenden Mittels einschließt.

5. Feuerfester Gegenstand nach einem der Ansprüche 1 bis 4, **dadurch gekennzeichnet, dass** der Gegenstand 2 bis 50 Gewichtsprozent amorphes Siliziumdioxid einschließt.

6. Feuerfester Gegenstand nach einem der Ansprüche 1 bis 4, **dadurch gekennzeichnet, dass** der Gegenstand 1 bis 10 Gewichtsprozent einer Art, ausgewählt aus Silizium, Aluminium, Magnesium oder deren Derivaten, einschließt.

7. Ziegel für Glasofenaufbauten, der mindestens 50 Gewichtsprozent kristallines Siliziumdioxid, nicht mehr als 1 Gewichtsprozent an restlichem Quarz und nicht mehr als 0,4 Gewichtsprozent Titanoxid einschließt, mit einer scheinbaren Dichte größer als oder gleich 1,88 und einem Fluxfaktor von weniger als oder gleich 0,75.

8. Brennverfahren für einen feuerfesten Gegenstand nach Anspruch 1, beinhaltend
a) fortschreitendes Erhitzen der Bestandteile auf eine Temperatur zwischen 1300 und 1500°C;
b) einen Haltezeitraum von 5 bis 100 Stunden bei der nach der Heizstufe erreichten Temperatur.

9. Verfahren nach Anspruch 8, **dadurch gekennzeichnet, dass** der Temperaturhaltestufe folgt c) weiteres Erhitzen auf eine Temperatur von 1500 bis 1650°C.

10. Verfahren nach Anspruch 8, **dadurch gekennzeichnet, dass** die Heizphase a) mit einer Rate von 5 bis 15°C/Stunde für 85 bis 300 Stunden ausgeführt wird.

## Revendications

1. Article réfractaire comprenant au moins 50% en poids de silice cristalline, au plus 1% en poids de quartz résiduel et au plus 0,4% en poids d'oxyde de titane, présentant une densité apparente supérieure ou égale à 1,88 et un facteur fondant inférieur ou égal à 0,75.

2. Article réfractaire selon la revendication 1, **caractérisé en ce que** la phase cristalline est composée essentiellement de tridymite et de cristobalite.

3. Article réfractaire selon la revendication 2, **caractérisé en ce que** le rapport (en poids) de la tridymite à la cristobalite est supérieur ou égal à 1.

4. Article réfractaire selon la revendication 3, **caractérisé en ce que** l'article comprend au moins 1% en poids d'un agent minéralisateur.

5. Article réfractaire selon l'une quelconque des revendications 1 à 4, **caractérisé en ce que** l'article comprend de 2 à 50% en poids de silice amorphe.

6. Article réfractaire selon l'une quelconque des revendications 1 à 4, **caractérisé en ce que** l'article comprend de 1 à 10% en poids d'une espèce choisie parmi le silicium, l'aluminium, le magnésium ou leurs dérivés.

7. Brique de superstructure de four à verre comprenant au moins 50% en poids de silice cristalline, au plus 1% en poids de quartz résiduel et au plus 0,4% en poids d'oxyde de titane, présentant une densité apparente supérieure ou égale à 1,88 et un facteur fondant inférieur ou égal à 0,75.

8. Procédé de cuisson d'un article réfractaire comprenant
a) une montée en température progressive des constituants jusqu'à une température comprise entre 1300 et 1500°C ;
b) un palier de 5 à 100 heures à la température atteinte après l'étape d'échauffement.

9. Procédé selon la revendication 8, **caractérisé en ce que,** après le palier de température, on procède à c) une montée en température jusqu'à une température de 1500 à 1650°C.

10. Procédé selon la revendication 8, **caractérisé en ce que** la montée en température a) est réalisée à une cadence de 5 à 15°C/heure pendant 85 à 300 heures.
